(19) 

Europäisches
Patentamt
European
Patent Office
Office européen
des brevets

(11)  **EP 4 760 848 A1**

(12) 

# EUROPEAN PATENT APPLICATION
published in accordance with Art. 153(4) EPC

(43) Date of publication:
**17.06.2026 Bulletin 2026/25**

(21) Application number: **24890047.4**

(22) Date of filing: **31.05.2024**

(51) International Patent Classification (IPC):
**H01M 10/0567** (2010.01)   **H01M 10/0568** (2010.01)
**H01M 10/0525** (2010.01)   **H01M 10/42** (2006.01)

(52) Cooperative Patent Classification (CPC):
**H01M 10/052; H01M 10/0525; H01M 10/054;
H01M 10/0567; H01M 10/0568; H01M 10/42;
Y02E 60/10**

(86) International application number:
**PCT/CN2024/096849**

(87) International publication number:
**WO 2025/102678 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.11.2023  CN 202311536240**

(71) Applicant: **Contemporary Amperex Technology
Co., Limited
Ningde, Fujian 352100 (CN)**

(72) Inventors:
• **CAO, Kaiyue**
  **Ningde, Fujian 352100 (CN)**
• **WU, Ze**
  **Ningde, Fujian 352100 (CN)**
• **LIU, Jiang**
  **Ningde, Fujian 352100 (CN)**

(74) Representative: **Kraus & Lederer PartGmbB
Thomas-Wimmer-Ring 15
80539 München (DE)**

(54) **ELECTROLYTE ADDITIVE COMPOSITION, ELECTROLYTE, BATTERY, AND ELECTRIC
DEVICE**

(57)     An electrolyte additive composition, an electrolyte, a battery, and an electric apparatus are provided. The electrolyte additive composition includes an isocyanate additive and an impedance-stabilizing additive at a weight ratio of (0.1 to 0.8):1. In the electrolyte additive composition, the impedance-stabilizing additive and the isocyanate additive are compounded, and a content ratio of the two is controlled, so that the stability of the impedance-stabilizing additive in the electrolyte can be improved, reducing the DCR of a cell of a battery and improving the stability of the DCR of the cell of the battery during charging, discharging, and storage, thereby improving the RTE of the battery during service.

FIG. 1

EP 4 760 848 A1

## Description

This application claims priority to Chinese Patent Application No. 202311536240.9, filed on November 17, 2023 and entitled "ELECTROLYTE ADDITIVE COMPOSITION, ELECTROLYTE, BATTERY, AND ELECTRIC APPARATUS", which is incorporated herein by reference in its entirety.

## TECHNICAL FIELD

This application pertains to the field of battery technology and specifically relates to an electrolyte additive composition, an electrolyte, a battery, and an electric apparatus.

## BACKGROUND

As one of the critical components in a liquid battery, an electrolyte is in direct contact with internal components such as a positive electrode, a negative electrode, and a separator of the liquid battery, significantly affecting the electrochemical performance of the liquid battery.

To improve the positive impact of the electrolyte on the electrochemical performance of the liquid battery, additives with corresponding functions are often added to the electrolyte. For example, to improve the round-trip efficiency (RTE) of the liquid battery during service, a type of additives capable of reducing or stabilizing direct current resistance (DCR) of a cell of the liquid battery are often added to the electrolyte, reducing or stabilizing the impedance of the liquid battery during cycling and storage, thereby improving the RTE of the liquid battery during the entire service life.

However, in practical application of the liquid battery, these additives capable of reducing or stabilizing the DCR of the cell exhibit low stability and are prone to decomposition. Additionally, reaction products of electrolyte components with trace water can react with and consume these additives. This leads to an increase in the DCR of the cell of the liquid battery, thereby reducing the RTE of the liquid battery.

## TECHNICAL PROBLEM

In view of the above issues, this application provides an electrolyte additive composition, an electrolyte, and a battery containing the electrolyte to address the technical problem of reduced round-trip efficiency of the existing battery due to an increase in the DCR of a cell of the battery.

## TECHNICAL SOLUTION

According to a first aspect, an embodiment of this application provides an electrolyte additive composition. The electrolyte additive composition of this embodiment of this application includes an impedance-stabilizing additive and an isocyanate additive, where a weight ratio of the isocyanate additive to the impedance-stabilizing additive is (0.1 to 0.8):1.

In the electrolyte additive composition of this embodiment of this application, the impedance-stabilizing additive and the isocyanate additive are compounded, and a content ratio of the two is controlled, so that the stability of the impedance-stabilizing additive in the electrolyte can be improved, reducing the DCR of a cell of a battery and improving the stability of the DCR of the cell of the battery during charging, discharging, and storage, thereby improving the RTE of the battery during service.

In some embodiments, the weight ratio of the isocyanate additive to the impedance-stabilizing additive is (0.2 to 0.5): 1. The isocyanate additive and the impedance-stabilizing additive in this ratio range are compounded, so that the stability of the impedance-stabilizing additive in the electrolyte can be further improved, further reducing the DCR of the cell of the battery and improving the stability of the DCR of the cell of the battery during charging, discharging, and storage, thereby further improving the RTE of the battery during service.

In some embodiments, the isocyanate additive includes at least one of phenyl isocyanate, p-toluenesulfonyl isocyanate, hexamethylene diisocyanate, 4-fluorophenyl isocyanate, 2,4,6-trifluorophenyl isocyanate, 2,4,6-trimethoxy isocyanate, and diethoxyphosphoryl isocyanate.

These isocyanate additives can further enhance the stability of the impedance-stabilizing additive in the electrolyte without causing an increase in the DCR of the cell of the battery due to the presence of these isocyanate additives. Therefore, these isocyanate additives can further reduce the DCR of the cell of the battery and improve the stability of the DCR of the cell of the battery during charging, discharging, and storage, thereby further improving the RTE of the battery during service.

In some embodiments, the isocyanate additive includes at least one of the following isocyanate additive compositions (1) to (5):

(1) a mixture including phenyl isocyanate and p-toluenesulfonyl isocyanate;

(2) a mixture including phenyl isocyanate and hexamethylene diisocyanate;

(3) a mixture including phenyl isocyanate and 2,4,6-trimethoxy isocyanate;

(4) a mixture including hexamethylene diisocyanate and p-toluenesulfonyl isocyanate; and

(5) a mixture including 4-fluorophenyl isocyanate and p-toluenesulfonyl isocyanate.

These compounds of two or more isocyanate additives can further reduce the DCR of the cell of the battery and improve the stability of the DCR of the cell of the battery during charging, discharging, and storage, thereby further improving the RTE of the battery during service.

In some embodiments, the impedance-stabilizing additive includes at least one of methylene methanedisulfonate and vinyl sulfate.

After these types of impedance-stabilizing additives are compounded with the isocyanate additive at the above ratio, the isocyanate additive can further reduce the self-decomposition of these types of impedance-stabilizing additives in the electrolyte, especially in high-temperature environments. Additionally, under the action of the isocyanate additive as a sacrificial agent or a protective agent, the adverse effects of components in the electrolyte, such as acidic substances, on the stability of these types of impedance-stabilizing additives (including hydrolysis of the impedance-stabilizing additives) can be further reduced, thereby further improving the stability of these types of impedance-stabilizing additives in the electrolyte to fully exert their functions, reducing the DCR of the cell of the battery and improving the stability of the DCR of the cell of the battery during charging, discharging, and storage, thus further improving the RTE of the battery during service.

In some embodiments, the electrolyte additive composition further includes an organic film-forming additive. The organic film-forming additive can participate in the formation of a SEI film in the cell, thereby improving the flexibility of the SEI film, reducing the brittleness of the SEI film, and improving the stability of the SEI film during charging and discharging of the cell to improve the cycling performance of the cell.

In an embodiment, a weight ratio of the organic film-forming additive to the impedance-stabilizing additive is (2 to 10):(0.5 to 5).

In an embodiment, the weight ratio of the organic film-forming additive to the impedance-stabilizing additive is (3 to 7):(0.5 to 5).

In an embodiment, the organic film-forming additive includes an alkenyl ester-containing additive.

These types and amounts of organic film-forming additives can more effectively participate in the formation of the SEI, further improving the toughness of the SEI and improving the stability of the cell during charging and discharging to improve the cycling performance of the cell. Additionally, the increase in DCR of the cell caused by the addition of the organic film-forming additive can also be mitigated.

In an exemplary embodiment, the alkenyl ester-containing additive includes at least one of vinylene carbonate, fluoroethylene carbonate, vinyl ethylene carbonate, and methylene ethylene carbonate.

These types of alkenyl ester-containing additives contain unsaturated double bonds and can participate in the formation of the SEI film during charging and discharging of the cell, thereby improving the toughness and stability of the SEI film.

In some embodiments, the electrolyte additive composition further includes an inorganic carbonate. The inorganic carbonate can improve the stability of the SEI film contained in the cell of the battery, reduce the DCR of the cell of the battery, and improve the stability of the DCR, thereby further improving the cycling performance of the battery and the RTE of the battery during service.

In an embodiment, a weight ratio of the inorganic carbonate to the impedance-stabilizing additive is (0.01 to 1):(0.5 to 5).

In an embodiment, the weight ratio of the inorganic carbonate to the impedance-stabilizing additive is (0.05 to 0.5):(0.5 to 5).

In an embodiment, the inorganic carbonate includes an alkali metal carbonate.

In an exemplary embodiment, the alkali metal carbonate includes at least one of lithium carbonate and sodium carbonate.

These types and amounts of inorganic carbonates can fully exert the function of the above inorganic carbonate, improving the RTE and cycling performance of the battery during service.

According to a second aspect, an embodiment of this application provides an electrolyte. The electrolyte of this embodiment of this application includes an organic solvent and an electrolytic salt dissolved in the organic solvent, where the electrolyte further includes the electrolyte additive composition of this embodiment of this application that is mixed in the organic solvent.

In the electrolyte of this embodiment of this application, through the electrolyte additive composition contained in the electrolyte, the stability of the impedance-stabilizing additive in the electrolyte can be improved, fully exerting the function of the impedance-stabilizing additive in the electrolyte, and reducing the DCR of a cell of a battery and improving the stability of the DCR of the cell of the battery during charging, discharging, and storage, thereby improving the RTE of the battery during service. Further, through at least one of the organic film-forming additive and the inorganic carbonate contained in the electrolyte, the stability of the SEI film in the cell during charging and discharging can be improved, thereby improving the cycling performance and conductivity of the cell.

In some embodiments, a content of the electrolyte additive composition in the electrolyte satisfies:

a concentration of the impedance-stabilizing additive in the electrolyte is 0.5wt% to 5wt%; and
the concentration of the impedance-stabilizing additive in the electrolyte is 1wt% to 3wt%.

Controlling the electrolyte additive composition of the embodiments of this application within this concentration range can improve the capability of the electrolyte additive composition of the embodiments of this application in reducing the DCR of the cell of the battery and improving the stability of the DCR of the cell of the battery during charging, discharging, and storage, thereby improving the RTE of the battery during service and improving the cycling performance of the battery.

In some embodiments, the organic solvent includes at least one of a cyclic carbonate, a chain carbonate, a cyclic ether, a chain ether, and a sulfone compound.

In an exemplary embodiment, the cyclic carbonate includes at least one of ethylene carbonate, propylene carbonate, butylene carbonate, and γ-butyrolactone.

In an exemplary embodiment, the chain carbonate includes at least one of dimethyl carbonate, diethyl carbonate, ethyl methyl carbonate, methyl propyl carbonate, ethyl propyl carbonate, methyl formate, ethyl formate, methyl acetate, ethyl acetate, propyl formate, propyl acetate, methyl propionate, ethyl propionate, propyl propionate, methyl butyrate, and ethyl butyrate.

In an exemplary embodiment, the cyclic ether includes at least one of tetrahydrofuran, 2-methyltetrahydrofuran, 1,3-dioxolane, and 4-methyl-1,3-dioxolane.

In an exemplary embodiment, the chain ether includes at least one of dimethoxymethane, 1,2-dimethoxyethane, 1,2-dimethoxypropane, and diethylene glycol dimethyl ether.

These types of organic solvents exhibit good stability, can effectively dissolve components such as the electrolytic salt and the additive, and can assist the additive contained therein in exerting the function, improving the capability of the electrolyte additive composition of the above embodiments of this application in reducing the DCR of the cell of the battery and improving the stability of the DCR, thereby further improving the RTE of the battery during service and improving the cycling performance of the battery.

In some embodiments, a concentration of the electrolytic salt in the electrolyte is 7wt% to 13wt%, optionally 8wt% to 11wt%.

In some embodiments, the concentration of the electrolytic salt in the electrolyte is 8wt% to 11wt%.

In some embodiments, the electrolytic salt includes at least one of a lithium salt and a sodium salt.

The above sodium salt or lithium salt as the electrolytic salt exhibits good stability and has functions of achieving effective ion transport and maintaining ion balance and electrochemical stability in the electrolyte, improving the stability of the DCR of the cell of the battery, thereby improving the RTE of the battery during service and improving the cycling performance of the battery.

According to a third aspect, an embodiment of this application provides a battery. The battery of this embodiment of this application includes the electrolyte of this embodiment of this application.

Since the battery of this embodiment of this application contains the electrolyte additive composition of the above embodiments of this application, the battery of this embodiment of this application has low DCR and high DCR stability, improving the RTE of the battery during service and improving the cycling performance of the battery.

According to a fourth aspect, an embodiment of this application provides an electric apparatus. The electric apparatus of this embodiment of this application includes the battery of the above embodiment of this application.

Since the electric apparatus of this embodiment of this application includes the battery of the above embodiment of this application, a power source unit or an energy storage unit of the electric apparatus of this embodiment of this application has high RTE, good cycling performance, and long service life; and the electric apparatus of this embodiment of this application has long standby time or battery life.

The above description is only an overview of the technical solutions of this application. To provide a clearer understanding of the technical means of this application and enable implementation in accordance with the content of the specification, and to make the above and other objectives, features, and advantages of this application more apparent, specific embodiments of this application are provided below.

## BRIEF DESCRIPTION OF DRAWINGS

Those of ordinary skill in the art will be clear about various other advantages and benefits by reading the detailed description of the preferred embodiments below. The accompanying drawings are merely intended to illustrate the preferred embodiments and are not intended to limit this application. Throughout the accompanying drawings, identical components are denoted by the same reference signs. In the accompanying drawings:

FIG. 1 is a schematic structural diagram of an embodiment of a battery cell according to an embodiment of this application;
FIG. 2 is a schematic exploded view of the battery cell shown in FIG. 1;
FIG. 3 is a schematic structural diagram of an embodiment of a battery module according to an embodiment of this application;
FIG. 4 is a schematic structural exploded view of a battery pack according to an embodiment of this application; and
FIG. 5 is a schematic diagram of an embodiment of an electric apparatus including a battery as a power source according to an embodiment of this application.

The reference signs in the specific embodiments are as follows:

10. battery cell; 11. housing; 111. inner wall; 12. electrode assembly; 121. large surface; 122. top surface; 13. cover plate;
20. battery module;
30. battery pack; 31. upper box body; and 32. lower box body.

## DESCRIPTION OF EMBODIMENTS

The following describes in detail the embodiments of the technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein have the same meaning as commonly understood by those skilled in the technical field of this application. The terms used herein are merely intended to describe specific embodiments, but not to limit this application. The terms "include", "have", and any variations thereof in the specification and claims of this application as well as the above description of the accompanying drawings are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means two or more, unless otherwise specifically defined.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. Additionally, the character "/" in this specification generally indicates an "or" relationship between the contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless explicitly specified and limited otherwise, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Those skilled in the art can understand the specific meanings of the above terms in the embodiments of this application based on specific circumstances.

With the continuous development of applications of batteries as traction batteries and energy storage batteries, higher requirements have been imposed on the round-trip efficiency (RTE) and cycle life of the batteries, especially when the batteries are used as energy storage batteries, the batteries are required to have a service life of 10 years or even 20 years or more, and higher requirements have been imposed on the RTE and cycle life of the batteries.

As one of the critical components in a liquid battery, an electrolyte is in direct contact with internal components such as a positive electrode, a negative electrode, and a separator of the battery, significantly affecting the electrochemical performance of the liquid battery. Therefore, to improve the positive impact of the electrolyte on the electrochemical performance of the liquid battery, additives with corresponding functions are often added to the electrolyte. For example, to improve the round-trip efficiency (RTE) of the liquid battery during service, a type of impedance-stabilizing additives capable of reducing or stabilizing the direct current resistance (DCR) of a cell of the liquid battery are often added to the electrolyte, reducing and stabilizing the impedance of the liquid battery during cycling and storage, thereby improving the RTE of the liquid battery during the entire service life.

However, in the practical application of the liquid battery, during long-term charging and discharging of the battery, especially in high-temperature environments such as high-temperature standing, the stability of these impedance-stabilizing additives capable of reducing or stabilizing the DCR of the cell decreases, leading to decomposition. Additionally, an electrolytic salt contained in the electrolyte reacts with trace water, especially in high-temperature environments, such reactions are prone to occurrence, generating an acidic substance. The generation of the acidic substance causes hydrolysis of the impedance-stabilizing additive contained in the electrolyte. Consequently, phenomena such as self-decomposition and hydrolysis of the impedance-stabilizing additive reduce the content of the impedance-stabilizing additive in the electrolyte, leading to an increase in the DCR of the cell of the battery, thus leading to low RTE of the battery during service.

Although in the existing reports, other additives are used to replace and assist commonly used impedance-stabilizing additives in an attempt to improve performance, the effect on reducing or stabilizing the DCR of the cell of the battery is not significant, and sometimes, excessive addition of these additives may even increase the DCR of cell of the battery.

To effectively reduce the DCR of the cell of the battery and improve the stability of the DCR so as to improve the RTE of the battery during service, through research, an electrolyte additive composition is proposed. Additives including an isocyanate additive and an impedance-stabilizing additive are compounded, and content ratios of corresponding additives are adjusted, so that the self-decomposition and hydrolysis of the impedance-stabilizing additive can be effectively reduced, effectively improving the stability of the impedance-stabilizing additive in the electrolyte, relatively significantly reducing the DCR of the cell of the battery, and improving the stability of the DCR of the cell of the battery, thereby relatively significantly improving the RTE of the battery during service.

Based on the above research, an embodiment of this application proposes the following technical solutions.

[Electrolyte additive composition]

According to a first aspect, an embodiment of this application provides an electrolyte additive composition. The electrolyte additive composition of this embodiment of this application includes an impedance-stabilizing additive and an isocyanate additive, where a weight ratio of the isocyanate additive to the impedance-stabilizing additive is (0.1 to 0.8):1.

In the electrolyte additive composition of this embodiment of this application, the impedance-stabilizing additive refers to a type of electrolyte additives capable of reducing the direct current resistance (DCR) of a cell of a battery or further stabilizing the DCR of the cell of the battery to prevent a significant increase in the DCR of the cell of the battery. The isocyanate additive refers to a type of compounds containing an isocyanate group (-NCO).

Thus, after the electrolyte additive composition of this embodiment of this application is added to an electrolyte as an additive, the impedance-stabilizing additive contained therein can reduce the DCR of the cell of the battery and effectively improve the stability of the DCR of the cell of the battery during charging, discharging, and storage. The isocyanate additive contained therein and a content ratio of the isocyanate additive to the impedance-stabilizing additive can improve the stability of the impedance-stabilizing additive in the electrolyte, especially its thermal stability, reducing its self-decomposition during charging, discharging, or storage of the cell of the battery. Additionally, the electrolytic salt contained in the electrolyte reacts with trace water, especially in high-temperature environments, such reactions are prone to occurrence, generating an acidic substance. The generation of the acidic substance causes hydrolysis of the impedance-stabilizing additive contained in the electrolyte. In this case, the isocyanate additive can act as a sacrificial agent or a protective agent and react with components such as the acidic substance in the electrolyte that are detrimental to the stability of the impedance-stabilizing additive, to reduce the content of these components such as the acidic substance in the electrolyte that are detrimental to the stability of the impedance-stabilizing additive, thereby reducing the adverse effects of these components such as the acidic substance on the stability of the impedance-stabilizing additive (including hydrolysis of the impedance-stabilizing additive). This improves the stability of the impedance-stabilizing additive in the electrolyte, allowing the impedance-stabilizing additive to fully exert its function in the electrolyte, thereby reducing the DCR of the cell of the battery and improving the stability of the DCR of the cell of the battery during charging, discharging, and storage. Additionally, controlling a compounding ratio of isocyanate to the impedance-stabilizing additive within the above range of (0.1 to 0.8):1 prevents an increase in the DCR of the cell of the battery due to the presence of additives such as the isocyanate. Therefore, in the electrolyte additive composition of this embodiment of this application, the impedance-stabilizing additive and the isocyanate additive are compounded, and a content ratio of the two is controlled, so that the stability of the impedance-stabilizing additive in the electrolyte can be improved, and the effects of the impedance-stabilizing additive in reducing the DCR of the cell of the battery and improving the stability of the DCR of the cell of the battery during charging, discharging, and storage can be improved, thereby improving the RTE of the battery during service.

In some embodiments, the weight ratio of the isocyanate additive to the impedance-stabilizing additive in the electrolyte additive composition of this embodiment of this application is (0.2 to 0.5):1. In an exemplary embodiment, based on the weight ratio of the isocyanate additive to the impedance-stabilizing additive being (0.2 to 0.8):1, optionally (0.2 to 0.5):1, the weight ratio of the isocyanate additive to the impedance-stabilizing additive may be typical but non-limiting ratios such as 0.1:1, 0.2:1, 0.3:1, 0.4:1, 0.5:1, 0.6:1, 0.7:1, 0.8:1, or a range defined by any two of these ratios. Further controlling the content of the isocyanate within this range can further improve the stability of the impedance-stabilizing additive in the electrolyte and improve the reaction between the isocyanate additive and the detrimental components such as the acidic substance generated in the electrolyte, thereby further reducing the adverse effects of these detrimental components such as the acidic substance on the stability of the impedance-stabilizing additive. Therefore, compounding the isocyanate additive with the impedance-stabilizing additive in the above ratio range can further improve the stability of the impedance-stabilizing additive in the electrolyte, further reducing the DCR of the cell of the battery and improving the stability of the DCR of the cell of the battery during charging, discharging, and storage, thereby further improving the RTE of the battery during service.

In some embodiments, the impedance-stabilizing additive in the electrolyte additive composition of this embodiment of this application includes at least one of methylene methanedisulfonate (MMDS) and vinyl sulfate (DTD). These types of impedance-stabilizing additives can reduce the DCR of the cell of the battery and, compared to other additives with same functions, have relatively high stability, with relatively reduced self-decomposition, thereby improving the stability of the DCR of the cell of the battery during charging, discharging, and storage. When compounded with the isocyanate additive at the above ratio, under the action of the isocyanate additive, the self-decomposition of these types of impedance-stabilizing additives in the electrolyte, especially in high-temperature environments, is further reduced; and the stability of these types of impedance-stabilizing additives in the electrolyte, especially in high-temperature environments, is further improved. Additionally, under the action of the isocyanate additive as the sacrificial agent or the protective agent, the adverse effects of the components such as the acidic substance in the electrolyte that are detrimental to the stability of the impedance-stabilizing additive on the stability of these types of impedance-stabilizing additives (including hydrolysis of the impedance-stabilizing additives) can be further reduced, thereby further improving the stability of these types of impedance-stabilizing additives in the electrolyte to fully exert their functions, reducing the DCR of the cell of the battery and improving the stability of the DCR of the cell of the battery during charging, discharging, and storage, thus further improving the RTE of the battery during service.

In an exemplary embodiment, when the impedance-stabilizing additive includes methylene methanedisulfonate, methylene methanedisulfonate can reduce the DCR of the cell of the battery and improve the stability of the DCR of the battery during normal charging, discharging, and storage. However, during long-term charging and discharging, especially in high-temperature environments, methylene methanedisulfonate still undergoes certain self-decomposition to produce polyformaldehyde. Additionally, in high-temperature environments, the electrolytic salt reacts with trace water to generate an acidic substance. For example, lithium hexafluorophosphate ($LiPF_6$) is prone to reaction with trace water to generate hydrofluoric acid. However, methylene methanedisulfonate is prone to hydrolysis by the acidic substance, further reducing the content of methylene methanedisulfonate. The reduction in the content of methylene methanedisulfonate in the electrolyte leads to an increase in the DCR of the cell of the battery. The increase in DCR of the cell of the battery results in a decrease in the RTE of the battery during service. The presence of isocyanate, that is, the compounding of isocyanate with the impedance-stabilizing additives such as methylene methanedisulfonate, can effectively reduce the self-decomposition, especially high-temperature decomposition and hydrolysis, of methylene methanedisulfonate, thereby further improving the stability of the impedance-stabilizing additives such as methylene methanedisulfonate in the electrolyte to fully exert their functions, reducing the DCR of the cell of the battery and improving the stability of the DCR of the cell of the battery during charging, discharging, and storage, thus further improving the RTE of the battery during service.

In some embodiments, the isocyanate additive in the electrolyte additive composition of this embodiment of this application includes at least one of phenyl isocyanate (PI), p-toluenesulfonyl isocyanate (PTSI), hexamethylene diisocyanate (HDI), 4-fluorophenyl isocyanate (FPI), 2,4,6-trifluorophenyl isocyanate (TFPI), 2,4,6-trimethoxy isocyanate (TMPI), and diethoxyphosphoryl isocyanate (DOPI). Selecting these isocyanate additives to interact with the impedance-stabilizing additive can further improve the stability of the impedance-stabilizing additive in the electrolyte, reducing its self-decomposition during charging, discharging, or storage of the cell of the battery. Additionally, these isocyanate additives are more prone to reaction with the acidic substance generated from the reaction of the electrolytic salt with trace water, consuming the content of the acidic substance in the electrolyte, thereby further reducing the hydrolysis of the impedance-stabilizing additive caused by the acidic substance. Thus, these isocyanate additives can further improve the stability of the impedance-stabilizing additive in the electrolyte without causing an increase in the DCR of the cell of the battery due to the presence of these isocyanate additives. Therefore, these isocyanate additives can further reduce the DCR of the cell of the battery and improve the stability of the DCR of the cell of the battery during charging, discharging, and storage, thereby further improving the RTE of the battery during service.

In some embodiments, the isocyanate additives in the above embodiments may be a combination of two or more components described below.

In an embodiment, the isocyanate additive includes the following compounded components:

Composition A1: a mixture including phenyl isocyanate (PI) and p-toluenesulfonyl isocyanate (PTSI), where in this embodiment, a weight ratio of PI to PTSI may be but is not limited to 1:1, and specifically, it may alternatively be other mixing ratios certainly.

Composition A2: a mixture including phenyl isocyanate (PI) and hexamethylene diisocyanate (HDI), where in this embodiment, a weight ratio of PI to HDI may be but is not limited to 1:1, and specifically, it may alternatively be other mixing ratios certainly.

Composition A3: a mixture including phenyl isocyanate (PI) and 2,4,6-trimethoxy isocyanate (TFPI), where in this embodiment, a weight ratio of PI to TFPI may be but is not limited to 1:1, and specifically, it may alternatively be other mixing ratios certainly.

Composition A4: a mixture including hexamethylene diisocyanate (HDI) and p-toluenesulfonyl isocyanate (PTSI), where in this embodiment, a weight ratio of HDI to PTSI may be but is not limited to 1:1, and specifically, it may alternatively be other mixing ratios certainly.

Composition A5: a mixture including 4-fluorophenyl isocyanate (FPI) and p-toluenesulfonyl isocyanate (PTSI), where in this embodiment, a weight ratio of FPI to PTSI may be but is not limited to 1:1, and specifically, it may alternatively be other mixing ratios certainly.

In the above embodiments, the isocyanate additive is compounded by more than two components, so that the stability of the impedance-stabilizing additive in the electrolyte can be further improved, and the self-decomposition of the impedance-stabilizing additive during charging, discharging, or storage of the cell of the battery can be reduced. Additionally, the hydrolysis of the impedance-stabilizing additive caused by the detrimental components such as the acidic substance generated in the electrolyte can also be further reduced. The compound formed by these two or more isocyanate additives can further reduce the negative electrode interface impedance and the DCR of the cell of the battery and improve the stability of the DCR of the cell of the battery during charging, discharging, and storage, thereby further enhancing the RTE of the battery during service.

In some embodiments, the electrolyte additive composition of the above embodiments of this application may further include an organic film-forming additive.

The organic film-forming additive refers to an additive in the electrolyte that can promote or further participate in the formation of a passivation film on an electrode in the cell and improve the related mechanical properties of the passivation film. This passivation film generally refers to a solid electrolyte interface film abbreviated as a SEI (Solid Electrolyte Interface) film. The presence of the organic film-forming additive can effectively improve the cycling performance of the cell. Specifically, the organic film-forming additive can participate in the formation of the SEI film in the cell, thereby improving the flexibility of the SEI film, reducing the brittleness of the SEI film, and improving the stability of the SEI film during charging and discharging of the cell.

In an embodiment, a weight ratio of the organic film-forming additive to the impedance-stabilizing additive is (2 to 10):(0.5 to 5), optionally (3 to 7):(0.5 to 5). In an exemplary embodiment, the weight ratio of the organic film-forming additive to the impedance-stabilizing additive may be typical but non-limiting ratios such as 2:0.5, 3:0.5, 4:0.5, 5:0.5, 6:0.5, 7:0.5, 8:0.5, 9:0.5, 10:0.5, 2:5, 3:5, 4:5, 5:5, 6:5, 7:5, 8:5, 9:5, 10:5, or a range defined by any two of these ratios. The organic film-forming additive within this ratio range can effectively promote or further promote the formation of the SEI in the cell, improve the mechanical properties of the SEI film, and improve the stability of the SEI film, thereby improving the cycling performance of the cell and allowing the DCR and RTE of the cell to be relatively stable.

In an embodiment, the organic film-forming additive includes an alkenyl ester-containing additive. These types of organic film-forming additives can more effectively participate in the formation of the SEI, further improving the toughness of the SEI and improving the stability of the cell during charging and discharging to improve the cycling performance of the cell. Additionally, the increase in DCR of the cell caused by the addition of the organic film-forming additive can also be mitigated.

In an exemplary embodiment, the alkenyl ester-containing additive may include at least one of vinylene carbonate (VC), fluoroethylene carbonate (FEC), vinyl ethylene carbonate (VEC), and methylene ethylene carbonate (MEC). These types of alkenyl ester-containing additives contain unsaturated double bonds and can participate in the formation of the SEI film during charging and discharging of the cell, thereby improving the toughness and stability of the SEI film. Additionally, these types of alkenyl ester-containing additives can also reduce the adverse effects on the DCR of the cell.

Furthermore, it has been found through research that when the electrolyte additive composition of the embodiments of this application contains the above organic film-forming additive, or when the electrolyte contains the organic film-forming additive, after the electrolyte additive composition of the embodiments of this application is added to the electrolyte, a decomposition product of the above impedance-stabilizing additive generated during self-decomposition may cause a polymerization reaction of the above organic film-forming additive, or the product participates in the polymerization reaction of the above organic film-forming additive, leading to content reduction or even failure of the organic film-forming additive, thus affecting the formation and stability of the SEI film. Additionally, when the acidic substance is generated from the reaction of the electrolytic salt contained in the electrolyte with trace water, if the isocyanate additive contained in the electrolyte additive composition of this application does not react with the acidic substance in a timely manner or does not completely consume the acidic substance during reaction, the remaining acidic substance, in addition to causing phenomena such as hydrolysis of the above impedance-stabilizing additive, may also increase the acidity and chromaticity of the electrolyte, making the electrolyte prone to deterioration and failure. Therefore, when the above impedance-stabilizing additive undergoes self-decomposition and the electrolytic salt contained in the electrolyte reacts with trace water, the cycling stability of the cell of the battery is reduced.

For example, when the above impedance-stabilizing additive contains methylene methanedisulfonate, methylene methanedisulfonate undergoes self-decomposition to produce polyformaldehyde, and polyformaldehyde easily causes reductive polymerization of the organic film-forming additive contained in the electrolyte, leading to content reduction or even failure of the organic film-forming additive, thereby affecting the formation and stability of the SEI film. The acidic substance generated from the reaction of the electrolytic salt with trace water also increases the acidity and chromaticity of the electrolyte, making the electrolyte prone to deterioration and failure. Therefore, when methylene methanedisulfonate undergoes self-decomposition and the electrolytic salt contained in the electrolyte reacts with trace water, the cycling stability of the cell of the battery is reduced.

To mitigate the reduction in cycling stability of the cell of the battery caused by the self-decomposition of the above impedance-stabilizing additive and the reaction of the electrolytic salt contained in the electrolyte with trace water, in an embodiment, the electrolyte additive composition of the embodiments of this application may further include an inorganic carbonate. The presence of the inorganic carbonate can effectively act as a protective agent, protecting the above organic film-forming additive including the alkenyl ester-containing additive, and mitigating the failure of the above organic film-forming additive due to polymerization by the self-decomposition product of the impedance-stabilizing additive. For example, when the above organic film-forming additive includes the alkenyl ester-containing additive and the impedance-stabilizing additive includes at least one of methylene methanedisulfonate (MMDS) and vinyl sulfate (DTD), the inorganic carbonate can mitigate the failure of the alkenyl ester-containing additive in reductive polymerization by polyformaldehyde from the self-decomposition of at least one of MMDS and DTD, thereby improving the stability of the organic film-forming additive to improve the cycling performance of the cell. Additionally, the presence of the inorganic carbonate can suppress the generation of organic components such as lithium alkyl carbonate contained in the SEI film of the cell, and promote the generation of highly conductive inorganic SEI film components such as $LiSO_4/LiCO_3$, thereby significantly improving the conductivity of the SEI film. Moreover, when the inorganic carbonate is added, its cations can improve the ionic conductivity of the electrolyte and reduce the increase in the DCR of the cell of the battery caused by the additives such as the above isocyanate additive. Therefore, the inorganic carbonate can improve the stability of the SEI film contained in the cell of the battery, reduce the DCR of the cell of the battery, and improve the stability of the DCR, thereby further improving the cycling performance and RTE of the battery during service.

In some embodiments, a weight ratio of the inorganic carbonate to the impedance-stabilizing additive may be (0.01 to 1):(0.5 to 5), optionally (0.05 to 0.5):(0.5 to 5). In an exemplary embodiment, the weight ratio of the inorganic carbonate to the impedance-stabilizing additive may be typical but non-limiting ratios such as 0.01:0.5, 0.05:0.5, 0.1:0.5, 0.2:0.5, 0.3:0.5, 0.4:0.5, 0.5:0.5, 0.6:0.5, 0.7:0.5, 0.8:0.5, 0.9:0.5, 1:0.5, 0.01:5, 0.05:5, 0.1:5, 0.2:5, 0.3:5, 0.4:5, 0.5:5, 0.6:5, 0.7:5, 0.8:5, 0.9:5, 1:5, or a range defined by any two of these ratios. The inorganic carbonate within this ratio range, on the basis that the functions of the above inorganic carbonate are fully exerted, can further improve the protective effect on the above organic film-forming additive such as the alkenyl ester-containing additive, improving the stability of the organic film-forming additive in the electrolyte, thereby further improving the cycling performance of the cell. Additionally, the DCR of the cell of the battery and the stability of the DCR are further reduced, thereby further improving the RTE of the battery during service.

In an exemplary embodiment, the inorganic carbonate may include an alkali metal carbonate. For example, the alkali metal carbonate includes at least one of lithium carbonate and sodium carbonate. Additionally, the inorganic carbonate may be selected based on the type of the electrolyte. For example, when the electrolyte is a lithium-ion electrolyte, the inorganic carbonate may use an inorganic carbonate including lithium carbonate. When the electrolyte is a sodium-ion electrolyte, the inorganic carbonate may use an inorganic carbonate including sodium carbonate. These inorganic carbonates can fully exert the function of the above inorganic carbonate, improving the RTE and cycling performance of the battery during service.

A preparation method of the electrolyte additive composition of the above embodiments may involve mixing the components contained therein, for example, mixing based on the types and content ratios of the above components contained therein. Certainly, the components may be separately prepared based on the types and content ratios of the above components contained therein and added to a solvent in proportion during preparation of an electrolyte.

[Electrolyte]

According to a second aspect, an embodiment of this application further provides an electrolyte. The electrolyte of this embodiment of this application includes an organic solvent, an electrolytic salt dissolved in the organic solvent, and an additive mixed in the organic solvent. The additive includes the above electrolyte additive composition of this application.

The electrolyte of this embodiment of this application can serve as a carrier for conducting ions between a positive electrode and a negative electrode. The organic solvent serves as a solvent carrier of the electrolyte. The electrolytic salt is an inorganic or organic salt with functions of achieving ion transport and maintaining ion balance in the electrolyte. The additive is a component other than the organic solvent and electrolytic salt used to improve properties such as film formation and conductivity of a cell. The additive being mixed in the organic solvent can at least be understood as being dissolved in the organic solvent. The additive includes the above electrolyte additive composition of this application, may include the above isocyanate additive and impedance-stabilizing additive at a weight ratio of (0.1 to 0.8):1, and may further include at least one additive of the above organic film-forming additive and inorganic carbonate.

Since the electrolyte of this embodiment of this application contains the above electrolyte additive composition of the embodiments of this application, the above isocyanate additive and impedance-stabilizing additive contained therein or at least one additive of the above organic film-forming additive and inorganic carbonate further contained therein is dissolved in the organic solvent. Thus, the above impedance-stabilizing additive can reduce the DCR of a cell of a battery and effectively improve the stability of the DCR of the cell of the battery during charging, discharging, and storage. The above isocyanate additive can improve the stability of the impedance-stabilizing additive in the electrolyte, reducing its self-decomposition during charging, discharging, or storage of the cell of the battery. Additionally, the above isocyanate additive acts as a sacrificial agent or a protective agent and can react with components such as an acidic substance generated in the electrolyte that are detrimental to the stability of the impedance-stabilizing additive, to reduce phenomena such as hydrolysis of the impedance-stabilizing additive, thereby improving the stability of the impedance-stabilizing additive in the electrolyte to fully exert the function of the impedance-stabilizing additive in the electrolyte, reducing the DCR of the cell of the battery, and improving the stability of the DCR of the cell of the battery during charging, discharging, and storage, thus improving the RTE of the battery during service.

When the electrolyte of this embodiment of this application further contains the above organic film-forming additive, the organic film-forming additive can effectively participate in the formation of an SEI film in the cell in the electrolyte of this embodiment of this application, thereby improving the flexibility of the SEI film, reducing the brittleness of the SEI film, and improving the stability of the SEI film during charging and discharging of the cell to improve the cycling performance of the cell.

When the electrolyte of this embodiment of this application further contains the above inorganic carbonate, the organic film-forming additive can effectively act as a protective agent in the electrolyte of this embodiment of this application, protecting the organic film-forming additive such as the alkenyl ester-containing additive in the electrolyte, and mitigating the failure of the above organic film-forming additive due to polymerization by the self-decomposition product of the impedance-stabilizing additive, thereby improving the stability of the organic film-forming additive to improve the cycling performance of the cell. Additionally, the organic film-forming additive can suppress the generation of organic components such as lithium alkyl carbonate contained in the SEI film of the cell, promote the generation of highly conductive inorganic SEI film components, and improve the ionic conductivity of the electrolyte, reducing the DCR of the cell of the battery and improving the stability of the DCR, thereby further improving the cycling performance and RTE of the battery during service.

In some embodiments, the content of the electrolyte additive composition of the above embodiments of this application in the electrolyte may be added according to the following proportional relationships.

A concentration of the impedance-stabilizing additive contained in the electrolyte additive composition of the embodiments of this application in the electrolyte is 0.5wt% to 5wt%, optionally 1wt% to 3wt%. In an exemplary embodiment, the concentration of the impedance-stabilizing additive in the electrolyte may be typical but non-limiting concentrations such as 0.5wt%, 1wt%, 1.5wt%, 2wt%, 2.5wt%, 3wt%, 3.5wt%, 4wt%, 4.5wt%, 5wt%, or a range defined by any two of these concentration values. Controlling the electrolyte additive composition of the embodiments of this application within this concentration range can improve the capability of the electrolyte additive composition of the embodiments of this application in reducing the DCR of the cell of the battery and improving the stability of the DCR of the cell of the battery during charging, discharging, and storage, thereby improving the RTE of the battery during service and improving the cycling performance of the battery.

Based on a weight ratio relationship between the isocyanate additive and the impedance-stabilizing additive in the electrolyte additive composition of the above embodiments of this application, when the concentration of the impedance-stabilizing additive in the electrolyte of this embodiment of this application is 0.5wt% to 5wt%, a concentration of the organic film-forming additive in the electrolyte of this embodiment of this application is 2wt% to 10wt%, optionally 3wt% to 7wt%; and a concentration of the inorganic carbonate in the electrolyte of this embodiment of this application is 0.01wt% to 1wt%, optionally 0.05wt% to 0.5wt%.

In some embodiments, the organic solvent in the electrolyte of this embodiment of this application may include at least one of a cyclic carbonate, a chain carbonate, a cyclic ether, a chain ether, a lactone compound, a nitrile compound, and a sulfone compound.

In an exemplary embodiment, the cyclic carbonate may include at least one of ethylene carbonate, propylene carbonate, butylene carbonate, and γ-butyrolactone.

In an exemplary embodiment, the chain carbonate may include at least one of dimethyl carbonate, diethyl carbonate, ethyl methyl carbonate, methyl propyl carbonate, ethyl propyl carbonate, methyl formate, ethyl formate, methyl acetate, ethyl acetate, propyl formate, propyl acetate, methyl propionate, ethyl propionate, propyl propionate, methyl butyrate, and ethyl butyrate.

In an exemplary embodiment, the cyclic ether may include at least one of tetrahydrofuran, 2-methyltetrahydrofuran, 1,3-dioxolane, and 4-methyl-1,3-dioxolane.

In an exemplary embodiment, the chain ether may include at least one of dimethoxymethane, 1,2-dimethoxyethane, 1,2-dimethoxypropane, and diethylene glycol dimethyl ether.

The above organic solvent exhibits good stability, can effectively dissolve components such as the electrolytic salt and the additive, and can assist the additive contained therein in exerting the function, such as improving the capability of the electrolyte additive composition of the above embodiments of this application in reducing the DCR of the cell of the battery and improving the stability of the DCR, thereby further improving the RTE of the battery during service and improving the cycling performance of the battery.

In some embodiments, a concentration of the electrolytic salt contained in the electrolyte in the electrolyte of this embodiment of this application is 7wt% to 13wt%, optionally 8wt% to 11wt%. In an exemplary embodiment, the concentration of the electrolytic salt in the electrolyte may be typical but non-limiting concentrations or a range defined by any two of these concentration values.

In some embodiments, the electrolytic salt in the electrolyte of this embodiment of this application may include at least one of a lithium salt and a sodium salt and may be specifically selected based on a type of a battery cell. For example, when the battery cell is a sodium battery cell, the electrolytic salt may be a sodium salt. Certainly, the electrolytic salt may also contain an appropriate amount of lithium salt. The lithium salt added can adjust the stability of the SEI film. When the battery cell is a lithium battery cell, the electrolytic salt may be a lithium salt.

In an exemplary embodiment, when the electrolytic salt includes a lithium salt, the lithium salt may include at least one of lithium hexafluorophosphate, lithium perchlorate, lithium tetrafluoroborate, lithium hexafluoroarsenate, lithium bis(trifluoromethanesulfonyl)imide, lithium bis(fluorosulfonyl)imide, lithium bis(oxalato)borate, and lithium difluoro(oxalato)borate. When the lithium salt includes lithium hexafluorophosphate, a molar proportion of lithium hexafluorophosphate in the lithium salt is 0.3% to 1.0%.

When the electrolytic salt includes a sodium salt, the sodium salt may include at least one of sodium hexafluorophosphate, sodium bis(fluorosulfonyl)imide, sodium trifluoromethanesulfonate, sodium sulfide, sodium chloride, sodium fluoride, sodium sulfate, sodium carbonate, sodium phosphate, sodium nitrate, sodium difluoro(oxalato)borate, sodium pyrophosphate, sodium dodecylbenzenesulfonate, sodium dodecyl sulfate, trisodium citrate, sodium metaborate, sodium borate, sodium molybdate, sodium tungstate, sodium bromide, sodium nitrite, sodium iodate, sodium iodide, sodium silicate, sodium lignosulfonate, sodium oxalate, sodium aluminate, sodium methanesulfonate, sodium acetate, sodium dichromate, sodium hexafluoroarsenate, sodium tetrafluoroborate, sodium perchlorate, and sodium trifluoromethanesulfonylimide.

The above sodium salt or lithium salt as the electrolytic salt exhibits good stability and has functions of achieving effective ion transport and maintaining ion balance and electrochemical stability in the electrolyte, improving the stability of the DCR of the cell of the battery, thereby improving the RTE of the battery during service and improving the cycling performance of the battery.

A preparation method of the electrolyte of the above embodiments may involve mixing components such as the electrolytic salt and the additive into the organic solvent in proportion according to the components contained in the electrolyte to prepare an electrolyte with components dispersed evenly. In an embodiment, a method of adding the components such as the electrolytic salt and the additive to the organic solvent in proportion may follow a preparation method of a lithium-ion electrolyte or a sodium-ion electrolyte.

[Battery]

According to a third aspect, an embodiment of this application provides a battery.

In an embodiment, the battery of this embodiment of this application may include any one of a battery cell, a battery module, and a battery pack.

Battery cell:

A battery cell, also known as a cell, includes a battery outer package, and an electrode assembly and an electrolyte encapsulated within the battery outer package. One or more electrode assemblies are included in the battery cell, which can be adjusted according to actual needs. The electrode assembly is immersed in the electrolyte.

Electrolyte of battery cell:

The electrolyte contained in the battery cell of this embodiment of this application is the electrolyte of the above embodiments of this application and specifically contains the electrolyte additive composition of the above embodiments of this application. To save space, the electrolyte is not described herein again.

Since the battery cell of this embodiment of this application contains the electrolyte additive composition of the above embodiments of this application, the battery cell of this embodiment of this application has low DCR and good DCR stability, improving the RTE of the battery cell during service and improving the cycling performance of the battery cell.

Outer package of battery cell:

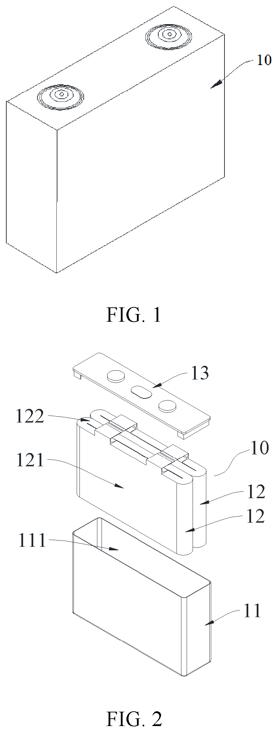

In an embodiment, the outer package of the battery cell may be a hard shell, such as a hard plastic shell, aluminum shell, or steel shell; or the outer package may be a soft pack, such as a soft pouch. The material of the soft pouch may be plastic, such as polypropylene, polybutylene terephthalate, or polybutylene succinate. The outer package may be cylindrical, rectangular, or of any other shapes. The shape of the outer package determines the shape of the battery cell, so the battery cell may alternatively be cylindrical, rectangular, or of any other shapes corresponding to the outer package. In an exemplary embodiment, the battery cell may be a battery cell 10 with a rectangular structure as shown in FIG. 1.

In some embodiments, as shown in FIG. 2, the outer package of the battery cell 10 may include a housing 11 and a cover plate 13. The housing 11 may include a bottom plate and side plates connected to the bottom plate, with the bottom plate and side plates enclosing an accommodating cavity. The housing 11 has an opening in communication with the accommodating cavity, and the cover plate 13 is configured to cover the opening to seal the accommodating cavity. One or more electrode assemblies 12 are encapsulated within the accommodating cavity.

Electrode assembly of battery cell:

In an embodiment, the electrode assembly included in the battery cell typically includes a positive electrode plate, a negative electrode plate, and a separator. The positive electrode plate and the negative electrode plate are alternately stacked, with the separator stacked between the positive electrode plate and the negative electrode plate to provide isolation, separating a positive electrode and a negative electrode. The positive electrode plate, the separator, and the negative electrode plate may form an electrode assembly with a stacked structure through a lamination process or an electrode assembly with a jelly-roll structure through a winding process. The electrode assembly including the separator is placed in the outer package, and then the electrolyte is injected and infiltrates the electrode assembly, followed by sealing to obtain the battery cell.

Positive electrode plate of electrode assembly:

In an embodiment, the positive electrode plate included in the electrode assembly includes a positive electrode current collector and a positive electrode active material layer bonded to at least one surface of the positive electrode current collector.

In an embodiment, the positive electrode current collector included in the positive electrode plate may include but is not limited to a metal current collector, a carbon current collector, a conductive resin current collector, and a composite current collector of metal and resin, more specifically, for example, aluminum, copper, nickel, titanium, iron, and their respective alloys, stainless steel, carbon fiber, carbon nanotubes (CNT), or graphite. In an embodiment, the current collector may alternatively be a dense film layer or a film layer with a porous structure. In an embodiment, the current collector may include but is not limited to an aluminum foil or a porous aluminum foil.

In an embodiment, the positive electrode active material layer included in the positive electrode plate may be bonded to one surface of the positive electrode current collector or bonded to both opposite surfaces of the positive electrode current collector. When a surface layer of the positive electrode current collector contains a porous structure or the positive electrode current collector itself is a porous structure, the positive electrode active material layer may be at least partially embedded in the current collector.

In an embodiment, a mass percentage of the positive electrode active material in the positive electrode active material layer included in the positive electrode plate may be 90% to 98%, optionally 92% to 96%. In an exemplary embodiment, it may be typical but non-limiting percentages such as 90%, 91%, 92%, 93%, 94%, 95%, 96%, 97%, 98%, or a range defined by any two of these percentages. The positive electrode active material within this percentage range can effectively increase the energy density of the positive electrode plate.

In an embodiment, the positive electrode active material may contain a sodium-ion positive electrode active material or a lithium-ion positive electrode active material. When the positive electrode active material contains the sodium-ion positive electrode active material, the battery cell of this embodiment of this application may be a sodium battery cell, and in this case, an electrolyte contained in the corresponding sodium battery cell is a sodium-ion electrolyte. When the positive electrode active material contains the lithium-ion positive electrode active material, the battery cell of this embodiment of this application may be a lithium battery cell, and in this case, an electrolyte contained in the corresponding lithium battery cell is a lithium-ion electrolyte.

In an exemplary embodiment, the sodium-ion positive electrode active material may include one or more of a sodium layered oxide, a polyanionic compound, and a Prussian blue compound. For example, the layered oxide may include $Na_xMO_2$, where M includes one or more of Fe, Mn, Ni, Co, Cr, Sc, Ti, V, Cr, Cu, and Zn, and $0.4 \leq x \leq 1$, such as $NaFe_{0.33}Mn_{0.33}Ni_{0.33}O_2$, $NaFe_{0.5}Ni_{0.5}O_2$, $Na_{0.6}MnO_2$, $Na_{0.44}MnO_2$, $Na_{0.65}Mn_{0.75}Ni_{0.25}O_2$, $NaNi_{0.5}Mn_{0.5}O_2$, $Na_{0.78}Ni_{0.23}Mn_{0.69}O_2$, $NaVO_2$, $NaFeO_2$, and $Na_{0.7}CoO_2$. The polyanionic compounds may include one or more of phosphates, pyrophosphates, sulfate-type, or anion-doped types, such as olivine-type $NaFePO_4$, $Na_2FeP_2O_7$, $NaFePO_4F$, $Na_3V_2(PO_4)_3$, and $NaFeSO_4$. The Prussian blue compound may include one or more of $Na_{0.61}Fe[Fe(CN)_6]_{0.94}$, BR-FeHCF, $Na_{1.48}Ni[Fe(CN)_6]_{0.89}$, and $NaNi_{0.05}Mn_{0.95}[Fe(CN)_6]$.

In an exemplary embodiment, the lithium-ion positive electrode active material may include but is not limited to one or more of $LiFePO_4$, $Li_3V_2(PO_4)_3$, $LiMn_2O_4$, $LiMnO_2$, $LiNiO_2$, $LiCoO_2$, $LiVPO_4F$, $LiFeO_2$, and $Li_{1+x}L_{1-y-z}M^1_yM^2_zO_2$, where $-0.1 \leq x \leq 0.2, 0 \leq y \leq 1, 0 \leq z \leq 1, 0 \leq y+z \leq 1$; and L, $M^1$, and $M^2$ each independently include one or more of Sc, Ti, V, Cr, Mn, Fe, Co, Ni, Cu, Zn, Al, Mg, and Ga.

These types of sodium-ion positive electrode active materials or lithium-ion positive electrode active materials have high specific capacity or further have high structural stability, providing good cycling performance.

In an embodiment, in addition to the above positive electrode active material components, the positive electrode active material layer included in the positive electrode plate typically further includes components such as a binder and a conductive agent. The binder can improve the mechanical properties between the positive electrode active material layer and the current collector. The conductive agent can effectively improve the conductivity of the positive electrode, such as reducing the resistance of the positive electrode.

In an embodiment, a mass percentage of the binder in the positive electrode active material layer may be 0.5% to 5%, optionally 1% to 3%. In an exemplary embodiment, it may be typical but non-limiting percentages such as 0.5%, 0.8%, 1%, 1.3%, 1.5%, 1.8%, 2%, 2.3%, 2.5%, 2.8%, 3%, or a range defined by any two of these percentages.

In an embodiment, the binder may include one or more of an oil-soluble binder, a water-soluble binder, and an emulsion-type binder. In an exemplary embodiment, the oil-soluble binder may include one or more of polyvinylidene fluoride, polyimide, polytetrafluoroethylene, polybutyl acrylate, and polyacrylonitrile. In an exemplary embodiment, the water-soluble binder may include one or more of carboxymethyl cellulose, carboxymethyl cellulose salt, polyacrylic acid, polyacrylate, polyvinyl alcohol, sodium alginate, and cyclodextrin. In an exemplary embodiment, the emulsion-type binder includes one or more of styrene-butadiene rubber, vinyl acetate resin, acrylic resin, and chlorinated rubber.

These types of binders with percentages within the above range can effectively improve the mechanical properties of the positive electrode active material layer and its bonding strength with the current collector, effectively improving the cycling performance of the positive electrode.

In an embodiment, a mass percentage of the conductive agent in the positive electrode active material layer may be 0.5% to 5%, optionally 1% to 3%. In an exemplary embodiment, it may be typical but non-limiting percentages such as 0.5%, 0.8%, 1%, 1.3%, 1.5%, 1.8%, 2%, 2.3%, 2.5%, 2.8%, 3%, or a range defined by any two of these percentages. In an embodiment, the conductive agent may include one or more of acetylene black (SP), conductive carbon black (super-P), Ketjen black, and graphene. These types of conductive agents with percentages within the above range can effectively improve the conductivity of the positive electrode active material layer.

Negative electrode plate of electrode assembly:

In an embodiment, the negative electrode plate included in the electrode assembly may include a negative electrode current collector and further optionally includes a negative electrode active material layer disposed on at least one surface of the negative electrode current collector, where the negative electrode active material layer contains a negative electrode active material. In an embodiment, the negative electrode current collector may include but is not limited to a metal or composite current collector. For example, as a metal, it may include sodium, sodium alloy, lithium, lithium alloy, copper, copper alloy, nickel, nickel alloy, titanium, titanium alloy, silver, and silver alloy. When sodium or sodium alloy serves as the negative electrode current collector, since sodium or sodium alloy itself can also serve as the negative electrode active material, similarly, when lithium or lithium alloy serves as the negative electrode current collector, since lithium or lithium alloy itself can also serve as the negative electrode active material, the negative electrode plate may not include the negative electrode active material layer, with sodium, sodium alloy, lithium, and lithium alloy serving as both the current collector and the negative electrode active material.

The composite current collector may include a composite material of a polymer material and a metal, where the polymer material may include but is not limited to polypropylene (PP), polyethylene terephthalate (PET), polybutylene terephthalate (PBT), polystyrene (PS), and polyethylene (PE). The metal may include but is not limited to sodium, lithium, copper, copper alloy, nickel, nickel alloy, titanium, titanium alloy, silver, and silver alloy. The composite current collector may be obtained by blending the polymer material with the metal or by applying the metal to at least one side of the polymer material through electroplating, coating, or other methods.

When the negative electrode includes a negative electrode active material layer, a negative electrode active material in the negative electrode active material layer may include but is not limited to any one of a carbon-based material, an alloy material, a titanium-based material, sodium metal, and lithium metal, or a mixture or composite material formed by several of these materials. The carbon-based material includes but is not limited to one or more of graphite, soft carbon, hard carbon, carbon microspheres, and carbon fiber. The alloy material includes but is not limited to one or more of sodium-tin alloy, sodium-germanium alloy, and sodium-antimony alloy; or the alloy material includes but is not limited to one or more of lithium-tin alloy, lithium-germanium alloy, and lithium-antimony alloy. The titanium-based material includes but is not limited to one or more of titanium dioxide, titanate, and titanium phosphate.

A mass percentage of the negative electrode active material in the negative electrode active material layer may be 85% to 98%, optionally 95% to 98%. In an exemplary embodiment, it may be typical but non-limiting percentages such as 85%, 90%, 91%, 92%, 93%, 94%, 95%, 96%, 97%, 98%, or a range defined by any two of these percentages.

The negative electrode active material layer may further include at least one of a conductive agent and a binder. The conductive agent is used to collect current between the negative electrode active materials and between the active material and the current collector, improving the electronic conductivity. Additionally, the conductive agent can also promote the infiltration of the electrolyte on the negative electrode plate. The binder can improve the bonding strength between the materials in the negative electrode active material layer and between the negative electrode active material layer and the current collector.

In an embodiment, a mass percentage of the conductive agent in the negative electrode active material layer may be 0.5% to 10%. In an exemplary embodiment, it may be typical but non-limiting percentages such as 0.5%, 1%, 2%, 3%, 4%, 5%, 6%, 7%, 8%, 9%, 10%, or a range defined by any two of these percentages, or it may be set to other percentages as needed. In an exemplary embodiment, the conductive agent includes one or more of acetylene black (SP), carbon nanotubes, conductive carbon black (super-P), Ketjen black, carbon fiber, and graphene.

In an embodiment, a mass percentage of the binder in the negative electrode active material layer may be 0.5% to 10%. In an exemplary embodiment, it may be typical but non-limiting percentages such as 0.5%, 1%, 2%, 3%, 4%, 5%, 6%, 7%, 8%, 9%, 10%, or a range defined by any two of these percentages, or it may be set to other percentages as needed. In an exemplary embodiment, the binder includes but is not limited to one or more of polyvinylidene fluoride, polyvinylidene fluoride-hexafluoropropylene copolymer, polyethylene oxide, polyimide, polytetrafluoroethylene, polybutyl acrylate, polyacrylonitrile, carboxymethyl cellulose, carboxymethyl cellulose salt, polyacrylic acid, polyacrylate, polyvinyl alcohol, sodium alginate, cyclodextrin, styrene-butadiene rubber, vinyl acetate resin, acrylic resin, and chlorinated rubber.

In an embodiment, the negative electrode active material layer further optionally includes a thickener. For example, the thickener may be but is not limited to carboxymethyl cellulose (CMC). A mass percentage of the thickener in the negative electrode active material layer may be set to 0.5% to 5%. In an exemplary embodiment, it may be typical but non-limiting percentages such as 0.5%, 1%, 1.5%, 2%, 2.5%, 3%, 3.5%, 4%, 4.5%, 5%, or a range defined by any two of these percentages.

Separator of electrode assembly:

In an embodiment, the separator, as described above, is disposed between the positive electrode plate and the negative electrode plate, separating the positive electrode plate and the negative electrode plate. The separator prevents electrons in the battery cell from passing freely, preventing short-circuiting between the electrodes due to contact therebetween. However, the separator allows cations such as sodium ions or lithium ions in the electrolytic salt to pass freely between the positive electrode plate and the negative electrode plate. The separator may be any known separator with a porous structure, electrochemical stability, and mechanical stability. In an embodiment, the separator includes a single-layer or multi-layer film made of at least one of glass fiber, non-woven fabric, polyethylene (PE), polypropylene (PP), polyvinylidene fluoride (PVDF), and the like.

Battery module:

The battery module is assembled by a battery cell. That is, the battery module may include a plurality of battery cells as described above, where the specific number of the battery cells can be adjusted according to the application and capacity of the battery module.

Since the battery module includes the battery cell of the above embodiments of this application, the battery module of an embodiment of this application has the electrochemical performance of the battery cell described above, with low DCR and good DCR stability, improving the RTE of the battery module during service and improving the cycling performance of the battery module.

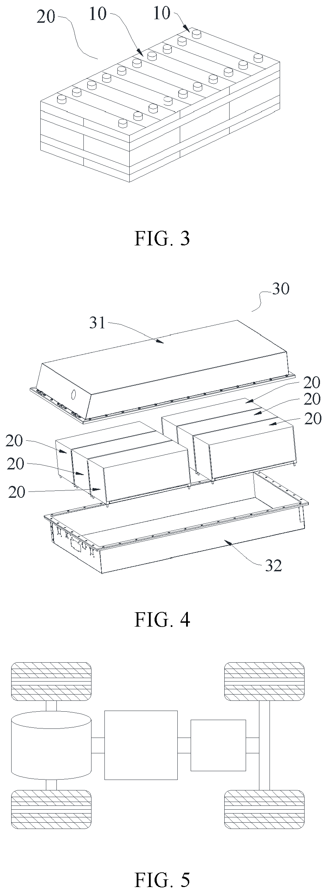

In some embodiments, FIG. 3 is a schematic diagram of a battery module 20 as an example. As shown in FIG. 3, in the battery module 20, a plurality of battery cells 10 may be sequentially arranged along a length direction of the battery module 20. Certainly, the battery cells 10 may alternatively be arranged in any other manner. Further, the plurality of battery cells 10 may be fixed using fasteners.

Optionally, the battery module 20 may further include a shell with an accommodating space, and the plurality of battery cells 10 are accommodated in the accommodating space.

Battery pack:

The battery pack is assembled by the battery cell of the above embodiments of this application. That is, the battery pack may include a plurality of battery cells of the above embodiments of this application, and the plurality of battery cells are assembled into the battery module described above. The specific number of battery cells or battery modules included in the battery pack may be adjusted according to the application and capacity of the battery pack.

Since the battery pack of the embodiments of this application includes the battery cell of the above embodiments of this application, the battery pack of the embodiments of this application has the electrochemical performance of the battery cell described above, with low DCR and good DCR stability, improving the RTE of the battery pack during service and improving the cycling performance of the battery pack.

In some embodiments, FIG. 4 is a schematic diagram of a battery pack 30 as an example. The battery pack 30 may include a battery box and a plurality of battery modules 20 disposed in the battery box. The battery box includes an upper box body 31 and a lower box body 32, where the upper box body 31 is configured to cover the lower box body 32 to form a closed space for accommodating the battery modules 20. The plurality of battery modules 20 may be arranged in the battery box in any manner.

Electric apparatus

According to a fourth aspect, an embodiment of this application further provides an electric apparatus. The electric apparatus of this embodiment of this application includes a power source unit or an energy storage unit, and certainly, may further include other auxiliary components or necessary components. The power source unit or the energy storage unit includes the battery of the above embodiments of this application. For example, the power source unit or the energy storage unit may be the battery cell, the battery module, or the battery pack of the above embodiments of this application. Since the electric apparatus of this embodiment of this application includes the battery cell, the battery module, or the battery pack of the above embodiments of this application, the power source unit or the energy storage unit of the electric apparatus of this embodiment of this application has high RTE, good cycling performance, and long service life; and the electric apparatus of this embodiment of this application has long standby time or battery life.

In some embodiments, the electric apparatus may include but is not limited to a mobile phone, a tablet, a laptop computer, an electric toy, an electric tool, an electric bicycle, an electric vehicle, a ship, and a spacecraft. The electric toy may include a fixed or mobile electric toy, such as a game console, an electric toy car, an electric toy ship, and an electric toy airplane. The spacecraft may include an airplane, a rocket, a space shuttle, and a spaceship. As the electric apparatus, the battery cell, the battery module, or the battery pack in the battery may be selected based on its usage needs.

FIG. 5 is a schematic diagram of an electric apparatus as an example. The electric apparatus is a battery electric vehicle, a hybrid electric vehicle, or a plug-in hybrid electric vehicle. To meet the high power and high energy density requirements of the electric apparatus, a battery pack or a battery module may be used.

In an embodiment, when the electric apparatus includes an energy storage unit, the electric apparatus may be an energy storage apparatus, where the energy storage apparatus includes an energy storage unit, and certainly, may further include other auxiliary components or necessary components. The energy storage unit includes the battery of the above embodiments of this application. One or more batteries are included in the energy storage unit. When there are a plurality of batteries, the plurality of batteries may form a battery module or battery pack. Since the energy storage apparatus of this embodiment of this application includes the battery of the above embodiments of this application, the energy storage apparatus has high energy density, good cycling performance, long service life, and further high energy density.

[Examples]

The following describes examples of this application. The examples described below are illustrative and merely for explaining this application. They should not be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

1. Examples of electrolyte

Examples A1 to A36:

Examples A1 to A36 each provided an electrolyte. Each electrolyte included an anhydrous organic solvent, a lithium salt dissolved in the anhydrous organic solvent, and an additive composition. The anhydrous organic solvent included ethylene carbonate (EC), ethyl methyl carbonate (EMC), and diethyl carbonate (DEC) at a mass ratio of EC:EMC:DEC = 3:5:2. The lithium salt contained lithium hexafluorophosphate ($LiPF_6$) with a molar concentration of 1.0 mol/L in the electrolyte. The anhydrous organic solvent and the lithium salt constituted a base electrolyte. The types and percentages of the components contained in the additive composition dissolved in the base electrolyte were shown in Table 1 below.

A preparation method for the electrolyte in each of Examples A1 to A36 was as follows: In a glovebox filled with argon (with moisture < 5 ppm and oxygen < 10 ppm), ethylene carbonate (EC), ethyl methyl carbonate (EMC), and diethyl carbonate (DEC) were mixed evenly at a mass ratio of EC:EMC:DEC = 3:5:2; then, lithium hexafluorophosphate ($LiPF_6$) was slowly added to the mixed solution until a molar concentration of $LiPF_6$ was 1.0 mol/L; and a base electrolyte was obtained. According to the types and contents of the additive compositions of Examples A1 to A36 in Table 1 below, the corresponding types and contents of additives were added on the basis of the base electrolyte to respectively prepare the electrolytes of Examples A1 to A36.

Comparative Examples A1 to A3:

Comparative Examples A1 to A3 each provided an electrolyte. Each electrolyte included an anhydrous organic solvent, a lithium salt dissolved in the anhydrous organic solvent, and an additive. Different from the electrolyte in Example A1, the types and contents of the additives contained in the electrolytes of Comparative Examples A1 to A3 were different. Specifically, the additives in Comparative Examples A1 to A3 were shown in Table 1 below.

A preparation method of the electrolyte in each of Comparative Examples A1 to A3 was the same as for the preparation method of the electrolyte in Example A1 except that the additives in Comparative Examples A1 to A3 were added according to the additives in Comparative Examples A1 to A3 in Table 1 below.

**Table 1**

| Example | Impedance-stabilizing additive and its content in electrolyte (wt%) | Isocyanate additive and its content in electrolyte (wt%) | Li$_2$CO$_3$ and its content in electrolyte (wt%) | Organic film-forming additive and its content in electrolyte (wt%) |
|---|---|---|---|---|
| Example A1 | MMDS: 2wt% | PI: 0.2wt%<br>PI:MMDS = 0.1:1 | 0.5wt% | VC: 5wt% |
| Example A2 | MMDS: 2wt% | PI: 0.4wt%<br>PI:MMDS = 0.2:1 | 0.5wt% | VC: 5wt% |
| Example A3 | MMDS: 2wt% | PI: 0.5wt%<br>PI:MMDS = 0.25:1 | 0wt% | VC: 5wt% |
| Example A4 | MMDS: 2wt% | PI: 0.5wt%<br>PI:MMDS = 0.25:1 | 0.01wt% | VC: 5wt% |
| Example A5 | MMDS: 2wt% | PI: 0.5wt%<br>PI:MMDS = 0.25:1 | 0.05wt% | VC: 5wt% |
| Example A6 | MMDS: 2wt% | PI: 0.5wt%<br>PI:MMDS = 0.25:1 | 0.3wt% | VC: 5wt% |
| Example A7 | MMDS: 2wt% | PI: 0.5wt%<br>PI:MMDS = 0.25:1 | 0.5wt% | VC: 5wt% |
| Example A8 | MMDS: 2wt% | PI: 0.5wt%<br>PI:MMDS = 0.25:1 | 0.8wt% | VC: 5wt% |
| Example A9 | MMDS: 2wt% | PI: 0.5wt%<br>PI:MMDS = 0.25:1 | 1wt% | VC: 5wt% |
| Example A10 | MMDS: 2wt% | PI: 0.5wt%<br>PI:MMDS = 0.25:1 | 0wt% | VEC: 5wt% |
| Example A11 | MMDS: 2wt% | PI: 0.5wt%<br>PI:MMDS = 0.25:1 | 0.3wt% | VEC: 5wt% |
| Example A12 | MMDS: 2wt% | PI: 0.5wt%<br>PI:MMDS = 0.25:1 | 0.5wt% | VEC: 5wt% |
| Example A13 | MMDS: 2wt% | PI: 0.6wt%<br>PI:MMDS = 0.3:1 | 0.5wt% | VC: 5wt% |
| Example A14 | MMDS: 2wt% | PI: 0.7wt%<br>PI:MMDS = 0.35:1 | 0.5wt% | VC: 5wt% |
| Example A15 | MMDS: 2wt% | PI: 1wt%<br>PI:MMDS = 0.5:1 | 0.5wt% | VC: 5wt% |
| Example A16 | MMDS: 2wt% | PI: 1.6wt%<br>PI:MMDS = 0.8:1 | 0.5wt% | VC: 5wt% |
| Example A17 | MMDS: 2wt% | PTSI: 0.6wt%<br>PTSI:MMDS = 0.3:1 | 0wt% | VC: 5wt% |
| Example A18 | MMDS: 2wt% | PTSI: 0.6wt%<br>PTSI:MMDS = 0.3:1 | 0.3wt% | VC: 5wt% |
| Example A19 | MMDS: 2wt% | PTSI: 0.6wt%<br>PTSI:MMDS = 0.3:1 | 0.5wt% | VC: 5wt% |
| Example A20 | MMDS: 2wt% | HDI: 0.6wt%<br>HDI:MMDS = 0.3:1 | 0wt% | VC: 5wt% |

(continued)

| Example | Impedance-stabilizing additive and its content in electrolyte (wt%) | Isocyanate additive and its content in electrolyte (wt%) | Li$_2$CO$_3$ and its content in electrolyte (wt%) | Organic film-forming additive and its content in electrolyte (wt%) |
|---|---|---|---|---|
| Example A21 | MMDS: 2wt% | HDI: 0.6wt%<br>HDI: MMDS = 0.3:1 | 0.3wt% | VC: 5wt% |
| Example A22 | MMDS: 2wt% | HDI: 0.6wt%<br>HDI:MMDS = 0.3:1 | 0.5wt% | VC: 5wt% |
| Example A23 | MMDS: 2wt% | FPI: 0.6wt%<br>FPI:MMDS = 0.3:1 | 0.5wt% | VC: 5wt% |
| Example A24 | MMDS: 2wt% | TFPI: 0.6wt%<br>TFPI:MMDS = 0.3:1 | 0.5wt% | VC: 5wt% |
| Example A25 | MMDS: 2wt% | TMPI: 0.6wt%<br>TMPI:MMDS = 0.3:1 | 0.5wt% | VC: 5wt% |
| Example A26 | MMDS: 2wt% | DOPI: 0.6wt%<br>DOPI:MMDS = 0.3:1 | 0.5wt% | VC: 5wt% |
| Example A27 | MMDS: 2wt% | PI + PTSI: 1.0wt%<br>PI:PTSI:MMDS = 0.25:0.25:1 | 0.5wt% | VC: 5wt% |
| Example A28 | MMDS: 2wt% | PI + HDI: 1.0wt%<br>PI:HDI:MMDS = 0.25:0.25:1 | 0.5wt% | VC: 5wt% |
| Example A29 | MMDS: 2wt% | PI + TMPI: 1.0wt%<br>PI:TMPI: MMDS = 0.25:0.25:1 | 0.5wt% | VC: 5wt% |
| Example A30 | MMDS: 2wt% | HDI + PTSI: 1.0wt%<br>HDI:PTSI:MMDS = 0.25:0.25:1 | 0.5wt% | VC: 5wt% |
| Example A31 | MMDS: 2wt% | FPI + PTSI: 1.0wt%<br>FPI:PTSI:MMDS = 0.25:0.25:1 | 0.5wt% | VC: 5wt% |
| Example A32 | MMDS: 0.5wt% | PI: 0.15wt%<br>PI:MMDS = 0.3:1 | 0.5wt% | VC: 5wt% |
| Example A33 | MMDS: 1wt% | PI: 0.3wt%<br>PI:MMDS = 0.3:1 | 0.5wt% | VC: 5wt% |
| Example A34 | MMDS: 3wt% | PI: 0.9wt%<br>PI:MMDS = 0.3:1 | 0.5wt% | VC: 5wt% |
| Example A35 | MMDS: 5wt% | PI: 1.5wt%<br>PI:MMDS = 0.3:1 | 0.5wt% | VC: 5wt% |
| Example A36 | DTD: 2wt% | PI: 0.6wt%<br>PI:MMDS = 0.3:1 | 0.5wt% | VC: 5wt% |
| Comparative Example A1 | MMDS: 2wt% | PI: 0wt% (no isocyanate) | 0.5wt% | VC: 5wt% |
| Comparative Example A2 | MMDS: 2wt% | PI: 0.18wt%<br>PI:MMDS = 0.09:1 | 0.5wt% | VC: 5wt% |
| Comparative Example A3 | MMDS: 2wt% | PI: 1.8wt%<br>PI:MMDS = 0.9:1 | 0.5wt% | VC: 5wt% |

The electrolytes of Examples A1 to A36 and Comparative Examples A1 to A3 were tested for acidity using the following method:

20 g of the electrolyte in each of Examples A1 to A36 and Comparative Examples A1 to A3 was taken in a conical flask, weighed and recorded as a mass m, and 1-2 drops of a neutral red methylene blue mixed indicator were added. Titration was performed using a triethylamine anhydrous acetonitrile solution with a concentration c; and a titration volume V of a standard solution was recorded. The acidity of the electrolyte was calculated using the following formula:

$$acidity\ of\ electrolyte\ (ppm) = 20.006 * 1000 * V * c\ /\ m.$$

The remaining electrolyte in each example was filled into a dried aluminum-plastic bottle, sealed, and placed in an oven at 60°C for three days. Then, the electrolyte was taken out; and the acidity of the electrolyte was measured again using the above method. The distribution of the test results was shown in Table 2 below, where an acidity difference in Table 2 was a difference between an acidity value of the electrolyte after storage at 60°C for 3 days and an initial acidity.

**Table 2**

| Example | Initial acidity | Acidity after storage at 60°C for 3 days | Acidity difference |
|---|---|---|---|
| Example A1 | 9.4 | 26.7 | 17.3 |
| Example A2 | 9.5 | 21.6 | 12.1 |
| Example A3 | 9.6 | 22.4 | 12.8 |
| Example A4 | 9.6 | 21.3 | 11.7 |
| Example A5 | 9.5 | 21.0 | 11.5 |
| Example A6 | 9.5 | 21.9 | 12.4 |
| Example A7 | 9.6 | 22.3 | 12.7 |
| Example A8 | 9.4 | 22.1 | 12.7 |
| Example A9 | 9.5 | 21.8 | 12.3 |
| Example A10 | 9.5 | 22.5 | 13 |
| Example A11 | 9.4 | 22.1 | 12.7 |
| Example A12 | 9.6 | 21.9 | 12.3 |
| Example A13 | 9.3 | 20 | 10.7 |
| Example A14 | 9 | 19.1 | 10.1 |
| Example A15 | 9.1 | 18.9 | 9.8 |
| Example A16 | 8.9 | 17.6 | 8.7 |
| Example A17 | 9.4 | 23.4 | 14 |
| Example A18 | 9.5 | 23.6 | 14.1 |
| Example A19 | 9.5 | 22.9 | 13.4 |
| Example A20 | 9.6 | 23.5 | 13.9 |
| Example A21 | 9.7 | 24.1 | 14.4 |
| Example A22 | 9.6 | 24.2 | 14.6 |
| Example A23 | 9.5 | 25.3 | 15.8 |
| Example A24 | 9.6 | 24.8 | 15.2 |
| Example A25 | 9.5 | 24.9 | 15.4 |
| Example A26 | 9.5 | 25.7 | 16.2 |
| Example A27 | 9.4 | 18.2 | 8.8 |
| Example A28 | 9.2 | 19 | 9.8 |
| Example A29 | 9.4 | 19.1 | 9.7 |
| Example A30 | 9.1 | 18.6 | 9.5 |

(continued)

| Example | Initial acidity | Acidity after storage at 60°C for 3 days | Acidity difference |
|---|---|---|---|
| Example A31 | 9.4 | 18.8 | 9.4 |
| Example A32 | 9.4 | 21.5 | 12.1 |
| Example A33 | 9.4 | 22.8 | 13.4 |
| Example A34 | 9.4 | 23.4 | 14 |
| Example A35 | 9.4 | 27.7 | 18.3 |
| Example A36 | 9.5 | 20.3 | 10.8 |
| Comparative Example A1 | 10.9 | 49.4 | 38.5 |
| Comparative Example A2 | 9.8 | 40.3 | 30.5 |
| Comparative Example A3 | 9.5 | 18.5 | 9 |

2. Examples of battery cell

Examples B1 to B36:

Examples B1 to B36 each provided a lithium-ion battery cell. The lithium-ion battery cell in each of Examples B1 to B36 included an outer package and an electrode assembly encapsulated within the outer package. The electrode assembly included a positive electrode plate, a separator, and a negative electrode plate stacked together, where the separator was stacked between the positive electrode plate and the negative electrode plate, and the electrode assembly was immersed in the electrolyte. The electrolyte of the lithium-ion battery cell in Example B1 was the electrolyte in Example A1, the electrolyte of the lithium-ion battery cell in Example B2 was the electrolyte in Example A2, and so forth, the electrolyte of the lithium-ion battery cell in Example B36 was the electrolyte in Example A36.

The lithium-ion battery cell in each of Examples B1 to B36 was assembled using the following method:

Positive electrode plate: A lithium-ion positive electrode active material lithium iron phosphate ($LiFePO_4$), a conductive agent carbon black, and a binder polyvinylidene fluoride (PVDF) were stirred and mixed well at a weight ratio of 97:1:2 in an appropriate amount of solvent N-methylpyrrolidone (NMP) to prepare a positive electrode active slurry with a solid content of 63wt% and a viscosity of 16000 mPa·s. The positive electrode active slurry was applied on 13 $\mu$m aluminum foil using double-sided coating equipment, followed by drying, cold-pressing (with a coating density of 2.4 g/cc and a thickness of 200 $\mu$m), and cutting to obtain a positive electrode plate.

Negative electrode plate: A negative electrode active material artificial graphite, a conductive agent conductive carbon black, a binder styrene-butadiene rubber (SBR), and a thickener sodium carboxymethyl cellulose (CMC) were mixed at a mass ratio of 95:1:2:2. Deionized water was added, stirred, and dispersed to prepare a negative electrode active slurry with a solid content of 55% and a viscosity of 7000 mPa·s. The negative electrode active slurry was applied on a copper foil (with a thickness of 6 $\mu$m) using double-sided coating equipment, followed by drying, cold-pressing (with a coating density of 1.6 g/cc and a thickness of 160 $\mu$m), and cutting to obtain a raw negative electrode plate.

Electrolyte: The electrolyte in each of Examples A1 to A36 and Comparative Examples A1 to A3 was used as an electrolyte of a lithium-ion battery cell.

Separator: A porous polyethylene (PE) separator with a thickness of 12 $\mu$m was used.

Battery assembly: The positive electrode plate, the separator, and the negative electrode plate were stacked in sequence, such that the separator was located between the positive electrode plate and the negative electrode plate to provide isolation. The resulting stack was made into the electrode assembly through a lamination process. Each electrode assembly was placed in an outer package, dried, then injected with the electrolyte, followed by processes such as vacuum sealing, standing, formation, and shaping to obtain the lithium-ion battery cell. The electrolyte in Example A1 was used as the electrolyte of the lithium-ion battery cell in Example B1, the electrolyte in Example A2 was used as the electrolyte of the lithium-ion battery cell in Example B2, and so forth, the electrolyte in Example A36 was used as the electrolyte of the lithium-ion battery cell in Example B36.

Comparative Examples B1 to B3:

Comparative Examples B1 to B3 each provided a lithium-ion battery cell. The lithium-ion battery cells in Comparative Examples B1 to B3 differed from the lithium-ion battery cell in Example B1 in that the electrolytes were different. Specifically, the electrolyte of the lithium-ion battery cell in Comparative Example B1 was the electrolyte in Comparative Example A1, the electrolyte of the lithium-ion battery cell in Comparative Example B2 was the electrolyte in Comparative Example A2, and so forth, the electrolyte of the lithium-ion battery cell in Comparative Example B3 was the electrolyte in Comparative Example A3.

The lithium-ion battery cells in Comparative Examples B1 to B3 were assembled using the method for the lithium-ion battery cell in Example B1.

Test of electrochemical performance of lithium-ion battery cell:

The lithium-ion battery cells provided in Examples B1 to B36 and Comparative Examples B1 to B3 were tested for relevant electrochemical performance in Table 3 using the following methods, with the test results shown in Table 3. The relevant electrochemical performance of the lithium-ion battery cells in Table 3 was tested using the following methods:

A test method of direct current resistance (DCR) was as follows:

(1) At 25°C, a battery was charged at a constant current of 1/3C to 3.65 V, then charged at a constant voltage until the current is less than 0.05C, and left standing for 5 min.
(2) The battery was discharged at 1C for a specified time to adjust a state of charge (state of charge, SOC) of the battery to 90% SOC, 50% SOC, and 20% SOC, respectively.
(3) 1C DC 30s and 1C CC 30s tests were performed respectively at the three SOC levels.
(4) The direct current resistance (DCR) for 1C CC 30s test was calculated.

A test method of round-trip efficiency (RTE) was as follows:

(1) Charge: At 25°C, a battery was charged at a constant power of 1P to 3.65 V, and left standing for 5 min.
(2) Discharge: At 25°C, the battery was discharged at a constant power of 1P to 2.5 V, and left standing for 5 min.
(3) The charge-discharge cycle was repeated three times.
(4) RTE was calculated as discharge energy / charge energy, and an average of the three values was taken as the RTE of the battery.

**Table 3**

| Example | DCR | | | RTE | Cycling performance |
|---|---|---|---|---|---|
| | 20% SOC | 50% SOC | 90% SOC | | Cycles to 70% SOH |
| Example B1 | 0.532 | 0.539 | 0.841 | 95.30% | 6127 |
| Example B2 | 0.520 | 0.528 | 0.824 | 95.55% | 6553 |
| Example B3 | 0.522 | 0.531 | 0.827 | 95.50% | 6335 |
| Example B4 | 0.519 | 0.526 | 0.822 | 95.57% | 6432 |
| Example B5 | 0.516 | 0.523 | 0.817 | 95.60% | 6754 |
| Example B6 | 0.501 | 0.51 | 0.784 | 95.60% | 7634 |
| Example B7 | 0.437 | 0.464 | 0.713 | 96.20% | 8357 |
| Example B8 | 0.441 | 0.468 | 0.721 | 96.10% | 8258 |
| Example B9 | 0.445 | 0.471 | 0.73 | 95.90% | 8126 |
| Example B10 | 0.533 | 0.552 | 0.855 | 95.20% | 6148 |
| Example B11 | 0.514 | 0.538 | 0.839 | 95.40% | 7364 |
| Example B12 | 0.5 | 0.511 | 0.789 | 95.60% | 8015 |
| Example B13 | 0.461 | 0.481 | 0.752 | 95.80% | 7862 |
| Example B14 | 0.472 | 0.497 | 0.773 | 95.70% | 7743 |
| Example B15 | 0.469 | 0.495 | 0.771 | 95.80% | 7778 |
| Example B16 | 0.473 | 0.499 | 0.779 | 95.70% | 7715 |
| Example B17 | 0.548 | 0.574 | 0.877 | 95.10% | 6135 |
| Example B18 | 0.517 | 0.531 | 0.824 | 95.50% | 6828 |
| Example B19 | 0.502 | 0.512 | 0.791 | 95.60% | 7367 |

(continued)

| Example | DCR | | | RTE | Cycling performance |
|---|---|---|---|---|---|
| | 20% SOC | 50% SOC | 90% SOC | | Cycles to 70% SOH |
| Example B20 | 0.573 | 0.591 | 0.89 | 95.00% | 6020 |
| Example B21 | 0.543 | 0.562 | 0.867 | 95.10% | 6739 |
| Example B22 | 0.524 | 0.545 | 0.843 | 95.30% | 7266 |
| Example B23 | 0.557 | 0.576 | 0.890 | 95.07% | 7193 |
| Example B24 | 0.552 | 0.571 | 0.887 | 95.12% | 7205 |
| Example B25 | 0.563 | 0.588 | 0.894 | 95.04% | 7064 |
| Example B26 | 0.565 | 0.589 | 0.897 | 95.00% | 7033 |
| Example B27 | 0.458 | 0.486 | 0.762 | 95.90% | 8011 |
| Example B28 | 0.452 | 0.481 | 0.763 | 95.90% | 7914 |
| Example B29 | 0.458 | 0.487 | 0.778 | 96.10% | 7792 |
| Example B30 | 0.451 | 0.482 | 0.783 | 95.90% | 7888 |
| Example B31 | 0.455 | 0.4999 | 0.787 | 96.15% | 7819 |
| Example B32 | 0.524 | 0.557 | 0.848 | 95.07% | 7026 |
| Example B33 | 0.503 | 0.536 | 0.825 | 95.12% | 7269 |
| Example B34 | 0.479 | 0.523 | 0.795 | 95.33% | 7584 |
| Example B35 | 0.465 | 0.519 | 0.787 | 95.25% | 7256 |
| Example B36 | 0.451 | 0.549 | 0.764 | 95.00% | 7893 |
| Comparative Example B1 | 0.598 | 0.623 | 0.936 | 93.80% | 3670 |
| Comparative Example B2 | 0.590 | 0.610 | 0.981 | 94.70% | 4289 |
| Comparative Example B3 | 0.697 | 0.899 | 1.124 | 94.60% | 4870 |

Based on the acidity data of the electrolyte in Table 3 and the acidity data in Table 2 above, from comparison of Examples A1/B1 to A2/B2, A7/B7, and A13/B13 to A16/B16, it can be seen that, under the precondition that the content of the impedance-stabilizing additive in the electrolyte remains the same, appropriately increasing the content of the isocyanate additive can reduce the acidity of the electrolyte and improve the stability of the acidity of the electrolyte. The DCR of the corresponding cell remains stable. Appropriately increasing the content of the isocyanate additive, for example, increasing a weight ratio of PI:MMDS from 0.1:1 to 0.25:1, correspondingly improves the round-trip efficiency (RTE) and cycling performance of the cell. Further increasing the content of the isocyanate additive, for example, increasing the weight ratio of PI:MMDS from 0.3:1 to 0.8:1, reduces the round-trip efficiency (RTE) and cycling performance of the cell.

From comparison of Example A1/B1 with Comparative Examples A1/B1 and A2/B2, it can be seen that when the content of the isocyanate additive in the electrolyte is excessively low, for example, as low as 0.18wt%, the acidity of the electrolyte significantly increases; the DCR of the corresponding cell increases, and its stability is reduced. Additionally, the round-trip efficiency (RTE) and cycling performance are significantly reduced.

From comparison of Example A16/B16 with Comparative Example A3/B3, it can be seen that when the content of the isocyanate additive in the electrolyte increases until a weight ratio of PI:MMDS is 0.9:1, although the acidity of the electrolyte does not significantly increase, the DCR, the round-trip efficiency (RTE), and cycling performance of the corresponding cell all significantly decrease.

From comparison of Examples A3/B3 to A9/B9, it can be seen that, under the precondition that the contents of the impedance-stabilizing additive and the isocyanate additive remain the same, appropriately increasing the content of the inorganic carbonate does not significantly change the acidity of the electrolyte, indicating that the electrolyte maintains good stability. The DCR of the corresponding cell also does not change significantly, so that the DCR of the cell maintains good stability. When the content of the inorganic carbonate increases from 0wt% to 0.5wt%, the round-trip efficiency (RTE) and cycling performance of the cell are correspondingly improved.

From comparison of Examples A13/B13, A19/B19, and A22/B22 to A26/B26, it can be seen that, under the precondition that the contents of the impedance-stabilizing additive and the isocyanate additive remain the same, the type of the isocyanate additive is changed to be arranged in an order of DOPI, TMPI, TFPI, FPI, HDI, PTSI, and PI. These isocyanate additives progressively improve the stability of the acidity of the electrolyte, and the round-trip efficiency (RTE) and cycling performance of the corresponding cell are also correspondingly improved progressively.

From comparison of Examples A15/B15 and A27/B27 to A31/B31, it can be seen that, under the precondition that the content of the impedance-stabilizing additive remains the same, two or more isocyanate additives are compounded, so that the compounded isocyanate additives can significantly improve the stability of the acidity value of the electrolyte, and the round-trip efficiency (RTE) and cycling performance of the corresponding cell are also significantly improved. This indicates that these compounded isocyanate additives have a synergistic effect, improving the stability of the electrolyte and improving the round-trip efficiency (RTE) and cycling performance of the cell.

From comparison of Examples A13/B13 and A32/B32 to A35/B35, it can be seen that, under the precondition that the content ratio of the isocyanate additive to the impedance-stabilizing additive remains the same, adjusting the content of the impedance-stabilizing additive affects the acidity value, the round-trip efficiency (RTE), and the cycling performance of the electrolyte to some extent. When the content of the impedance-stabilizing additive is 2wt% as in Example A13/B13, the stability of the acidity value of the electrolyte and the round-trip efficiency (RTE) and cycling performance of the cell can be relatively significantly improved.

From comparison of Example A13/B13 with Example A36/B36, under the precondition that the content ratio of the isocyanate additive to the impedance-stabilizing additive remains the same, changing the type of the impedance-stabilizing additive can effectively maintain the stability of the acidity of the electrolyte. Additionally, the round-trip efficiency (RTE) and cycling performance are also significantly improved compared to Comparative Examples A1/B1 to A3/B3. MMDS can relatively significantly improve the round-trip efficiency (RTE) of the cell compared to DTD.

In conclusion, it should be noted that the above embodiments are merely intended for describing the technical solutions of this application but not for limiting this application. Although this application is described in detail with reference to the above embodiments, those of ordinary skill in the art should understand that they may still make modifications to the technical solutions described in the above embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the technical features mentioned in the embodiments can be combined in any manner. This application is not limited to the specific embodiments disclosed herein but includes all technical solutions falling within the scope of the claims.

**Claims**

1. An electrolyte additive composition, **characterized by** comprising an impedance-stabilizing additive and an isocyanate additive, wherein a weight ratio of the isocyanate additive to the impedance-stabilizing additive is (0.1 to 0.8):1.

2. The electrolyte additive composition according to claim 1, **characterized in that** the weight ratio of the isocyanate additive to the impedance-stabilizing additive is (0.2 to 0.5):1.

3. The electrolyte additive composition according to claim 1 or 2, **characterized in that** the isocyanate additive comprises at least one of phenyl isocyanate, p-toluenesulfonyl isocyanate, hexamethylene diisocyanate, 4-fluorophenyl isocyanate, 2,4,6-trifluorophenyl isocyanate, 2,4,6-trimethoxy isocyanate, and diethoxyphosphoryl isocyanate.

4. The electrolyte additive composition according to any one of claims 1 to 3, **characterized in that** the isocyanate additive comprises at least one of the following isocyanate additive compositions (1) to (5):

   (1) a mixture comprising phenyl isocyanate and p-toluenesulfonyl isocyanate;
   (2) a mixture comprising phenyl isocyanate and hexamethylene diisocyanate;
   (3) a mixture comprising phenyl isocyanate and 2,4,6-trimethoxy isocyanate;
   (4) a mixture comprising hexamethylene diisocyanate and p-toluenesulfonyl isocyanate; and
   (5) a mixture comprising 4-fluorophenyl isocyanate and p-toluenesulfonyl isocyanate.

5. The electrolyte additive composition according to any one of claims 1 to 4, **characterized in that**

   the impedance-stabilizing additive comprises at least one of methylene methanedisulfonate and vinyl sulfate;

and/or
the electrolyte additive composition further comprises an organic film-forming additive.

6. The electrolyte additive composition according to claim 5, **characterized in that** a weight ratio of the organic film-forming additive to the impedance-stabilizing additive is (2 to 10):(0.5 to 5); and/or
the organic film-forming additive comprises an alkenyl ester-containing additive.

7. The electrolyte additive composition according to claim 6, **characterized in that** the alkenyl ester-containing additive comprises at least one of vinylene carbonate, fluoroethylene carbonate, vinyl ethylene carbonate, and methylene ethylene carbonate.

8. The electrolyte additive composition according to claim 6 or 7, **characterized in that** the weight ratio of the organic film-forming additive to the impedance-stabilizing additive is (3 to 7):(0.5 to 5).

9. The electrolyte additive composition according to any one of claims 1 to 8, **characterized in that** the electrolyte additive composition further comprises an inorganic carbonate.

10. The electrolyte additive composition according to claim 9, **characterized in that** a weight ratio of the inorganic carbonate to the impedance-stabilizing additive is (0.01 to 1):(0.5 to 5); and/or
the inorganic carbonate comprises an alkali metal carbonate.

11. The electrolyte additive composition according to claim 10, **characterized in that** the alkali metal carbonate comprises at least one of lithium carbonate and sodium carbonate.

12. The electrolyte additive composition according to claim 10 or 11, **characterized in that** the weight ratio of the inorganic carbonate to the impedance-stabilizing additive is (0.05 to 0.5):(0.5 to 5).

13. An electrolyte, comprising an organic solvent and an electrolytic salt dissolved in the organic solvent, **characterized in that** the electrolyte further comprises the electrolyte additive composition according to any one of claims 1 to 12 that is mixed in the organic solvent.

14. The electrolyte according to claim 13, **characterized in that** a content of the electrolyte additive composition in the electrolyte satisfies:
a concentration of the impedance-stabilizing additive in the electrolyte is 0.5wt% to 5wt%.

15. The electrolyte according to claim 14, **characterized in that** the concentration of the impedance-stabilizing additive in the electrolyte is 1wt% to 3wt%.

16. The electrolyte according to any one of claims 13 to 15, **characterized in that** the organic solvent comprises at least one of a cyclic carbonate, a chain carbonate, a cyclic ether, a chain ether, and a sulfone compound.

17. The electrolyte according to claim 16, **characterized in that** the cyclic carbonate comprises at least one of ethylene carbonate, propylene carbonate, butylene carbonate, and γ-butyrolactone; and/or

the chain carbonate comprises at least one of dimethyl carbonate, diethyl carbonate, ethyl methyl carbonate, methyl propyl carbonate, ethyl propyl carbonate, methyl formate, ethyl formate, methyl acetate, ethyl acetate, propyl formate, propyl acetate, methyl propionate, ethyl propionate, propyl propionate, methyl butyrate, and ethyl butyrate; and/or
the cyclic ether comprises at least one of tetrahydrofuran, 2-methyltetrahydrofuran, 1,3-dioxolane, and 4-methyl-1,3-dioxolane; and/or
the chain ether comprises at least one of dimethoxymethane, 1,2-dimethoxyethane, 1,2-dimethoxypropane, and diethylene glycol dimethyl ether.

18. The electrolyte according to any one of claims 13 to 17, **characterized in that** the electrolytic salt comprises at least one of a lithium salt and a sodium salt; and/or
a concentration of the electrolytic salt in the electrolyte is 7wt% to 13wt%.

19. The electrolyte according to any one of claims 13 to 18, **characterized in that** the concentration of the electrolytic salt in the electrolyte is 8wt% to 11wt%.

20. A battery, **characterized by** comprising the electrolyte according to any one of claims 13 to 19.

21. An electric apparatus, comprising the battery according to claim 20.

FIG. 1

FIG. 2

FIG. 3

FIG. 4

FIG. 5

# EP 4 760 848 A1

## INTERNATIONAL SEARCH REPORT

| | International application No. |
|---|---|
| | **PCT/CN2024/096849** |

| **A.** | **CLASSIFICATION OF SUBJECT MATTER** |
|---|---|

H01M10/0567(2010.01)i; H01M10/0568(2010.01)i; H01M10/0525(2010.01)i; H01M10/42(2006.01)i

According to International Patent Classification (IPC) or to both national classification and IPC

| **B.** | **FIELDS SEARCHED** |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, VCN, ENTXTC, VEN, DWPI: 电池, 电解液, 添加剂, 甲烷 2w 磺酸亚甲酯, 硫酸乙烯酯, 异氰酸酯, additive, electrolyte, battery, isocyanate, ethylene sulfate

| **C.** | **DOCUMENTS CONSIDERED TO BE RELEVANT** | | |
|---|---|---|---|

| Category* | Citation of document, with indication, where appropriate, of the relevant passages | Relevant to claim No. |
|---|---|---|
| X | CN 116632347 A (JIANGSU GUXIN ENERGY TECHNOLOGY CO., LTD.) 22 August 2023 (2023-08-22)<br>description, paragraphs 48-69, the embodiments, and table 1 | 1-21 |
| X | CN 112397785 A (HEFEI GUOXUAN HIGH-TECH POWER ENERGY CO., LTD.) 23 February 2021 (2021-02-23)<br>the embodiments, and tables 1-2 | 1-21 |
| X | CN 112510256 A (ZHEJIANG RESEARCH INSTITUTE OF CHEMICAL INDUSTRY CO., LTD. et al.) 16 March 2021 (2021-03-16)<br>embodiments 1-15 | 1-21 |
| X | CN 112615056 A (GUANGZHOU TINCI MATERIALS TECHNOLOGY CO., LTD.) 06 April 2021 (2021-04-06)<br>claims 1-13, and the embodiments | 1-21 |
| X | CN 113270632 A (DONGGUAN SHANSHAN BATTERY MATERIALS CO., LTD. et al.) 17 August 2021 (2021-08-17)<br>claims 1-10, and the embodiments | 1-21 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 August 2024** | **17 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/096849**

### C. DOCUMENTS CONSIDERED TO BE RELEVANT

| Category* | Citation of document, with indication, where appropriate, of the relevant passages | Relevant to claim No. |
|---|---|---|
| A | CN 116247293 A (WANHUA CHEMICAL (SICHUAN) CO., LTD. et al.) 09 June 2023 (2023-06-09) <br> entire document | 1-21 |

Form PCT/ISA/210 (second sheet) (July 2022)

**INTERNATIONAL SEARCH REPORT**
Information on patent family members

International application No.

**PCT/CN2024/096849**

| Patent document cited in search report | | | Publication date (day/month/year) | Patent family member(s) | | | Publication date (day/month/year) |
|---|---|---|---|---|---|---|---|
| CN | 116632347 | A | 22 August 2023 | None | | | |
| CN | 112397785 | A | 23 February 2021 | None | | | |
| CN | 112510256 | A | 16 March 2021 | CN | 112510256 | B | 29 August 2023 |
| | | | | CN | 111384443 | A | 07 July 2020 |
| | | | | CN | 112510258 | A | 16 March 2021 |
| | | | | CN | 111384443 | B | 15 September 2023 |
| | | | | WO | 2020135694 | A1 | 02 July 2020 |
| CN | 112615056 | A | 06 April 2021 | CN | 112615056 | B | 31 March 2023 |
| CN | 113270632 | A | 17 August 2021 | None | | | |
| CN | 116247293 | A | 09 June 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311536240